(19) **Europäisches Patentamt**

**European Patent Office**

**Office européen des brevets**

(11) Veröffentlichungsnummer: **0 100 014**
**B1**

(12) # EUROPÄISCHE PATENTSCHRIFT

(45) Veröffentlichungstag der Patentschrift:
**25.09.85**

(51) Int. Cl.⁴: **G 02 C 3/00**

(21) Anmeldenummer: **83106750.9**

(22) Anmeldetag: **09.07.83**

(54) **Brillenähnliches Gestell.**

(30) Priorität: **28.07.82 DE 3228093**

(43) Veröffentlichungstag der Anmeldung:
**08.02.84 Patentblatt 84/6**

(45) Bekanntmachung des Hinweises auf die Patenterteilung:
**25.09.85 Patentblatt 85/39**

(84) Benannte Vertragsstaaten:
**AT BE CH DE FR GB IT LI NL SE**

(56) Entgegenhaltungen:
**CH - A - 323 040**
**DE - A - 121 778**
**US - A - 3 183 523**

(73) Patentinhaber: **Heide, Otto, Dr.-Ing., Am Dickelsbach 12,
D-4030 Ratingen 6 (DE)**

(72) Erfinder: **Heide, Otto, Dr.-Ing., Am Dickelsbach 12,
D-4030 Ratingen 6 (DE)**
Erfinder: **Heide, Marc Otto, Am Dickelsbach 12,
D-4030 Ratingen 6 (DE)**
Erfinder: **Heide, Nicole Susanne, Am Dickelsbach 12,
D-4030 Ratingen 6 (DE)**
Erfinder: **Heide, Philipp Julius, Am Dickelsbach 12,
D-4030 Ratingen 6 (DE)**
Erfinder: **Wagner, geb. Heide, Christa, Breslauer
Strasse 14, D-3560 Biedenkopf (DE)**

(74) Vertreter: **Patentanwaltsbüro Cohausz & Florack,
Postfach 14 01 47, D-4000 Düsseldorf 1 (DE)**

## Beschreibung

Die Erfindung betrifft ein brillenähnliches Gestell, das im Augenbereich klemmend zu befestigen ist und mindestens ein Augenglas aufnimmt. Ein solches Gestell ist aus CH-A Nr. 323040 bekannt.

Üblicherweise werden Augengläser in Brillengestellen gehalten, welche am Kopf des Menschen in einer Drei-Punkt-Lagerung an der Nase und mit Hilfe der Ohrenbügel an den Ohren befestigt sind. Daneben gibt es ein Brillengestell ohne Ohrenbügel, das an der Nase festgeklemmt wird.

Diese bekannten Brillengestelle mit Ohrenbügel verursachen Druckstellen an Nase und Ohren und sind schon allein aufgrund der Bügel von hohem Gewicht. Die Brillengestelle ohne Ohrenbügel üben einen durch Federkraft erzeugten Druck auf die Nase aus, der bei längerer Tragdauer störend ist.

Aufgabe der Erfindung ist es, ein brillenähnliches Gestell zu schaffen, das bei geringem Gewicht und kleinen Abmessungen einen sicheren Halt am Kopf schafft und keinen störenden Druck auf die Nase oder andere Stellen des Kopfes ausübt.

Diese Aufgabe wird erfindungsgemäss dadurch gelöst, dass das brillenähnlichen Gestell eine Klemme, insbesondere eine Klammer aufweist, die zur Befestigung an der Augenbraue ausgebildet ist und die direkt oder indirekt die Fassung zur Aufnahme des Augenglases hält.

Zum Unterschied zum Stand der Technik wird bei der vorliegenden Erfindung das das Augenglas haltende Gestell an der Augenbraue befestigt. Eine Befestigung an den Ohren kann entfallen, und eine Abstützung an der Nase ist bei bestimmten Ausführungen nicht erforderlich. Wesentliche Merkmale der Befestigung an der Augenbraue sind die Klemme oder Klammer, die sich in den Haaren der Augenbraue festklemmt. Ferner können Abstützelemente vorgesehen sein, die ein Kippen oder Abkippen der Klemme durch Abstützen am Schädel verhindern. Durch eine Aufteilung der Klemme in mehrere Klemmbereiche wird eine Absicherung der Klemmwirkung erreicht.

An der Klemme ist die eigentliche Augenglasfassung befestigt. Sie schwebt z. B. unterhalb der Klemme frei im Raum. Das Gerät kann einzeln getragen werden oder als zwei voneinander unabhängige Einzel-Gestelle. Eine Verbindung zwischen zwei Einzel-Gestellen, z. B. über einen Steg, zu einem brillenähnlichen, zwei Augengläser aufnehmenden Gestell ist möglich.

Vorteilhafte Ausgestaltungen der Erfindung sind in den Unteransprüchen aufgeführt.

Ausführungsbeispiele der Erfindung sind in den Zeichnungen dargestellt und werden im folgenden näher beschrieben. Es zeigen:

Fig. 1 eine Ansicht der dem Kopf zugewandten Seite einer Klemme in geschlossenem Zustand;

Fig. 2 eine Ansicht in Richtung des Pfeiles A in Fig. 1;

Fig. 3 eine Ansicht der dem Kopf abgewandten Serie der Klemme nach Fig. 1;

Fig. 4 eine Ansicht nach Fig. 1 in geöffnetem Zustand;

Fig. 5 eine Ansicht in Richtung des Pfeiles B in Fig. 4;

Fig. 6 eine Ansicht der dem Kopf zugewandten Seite einer Klemme mit befestigter Fassung in kleinerem Massstab;

Fig. 7 eine am Kopf befestigte Klemme;

Fig. 8 eine Ansicht der dem Kopf abgewandten Seite einer Ausführung für beide Augen mit drehverstellbarem Verbindungsgestänge, und

Fig. 9 eine Ansicht nach Fig. 8 einer Ausführung für beide Augen mit einem Verbindungsgestänge als Öffnungsmechanismus für die Klemmen.

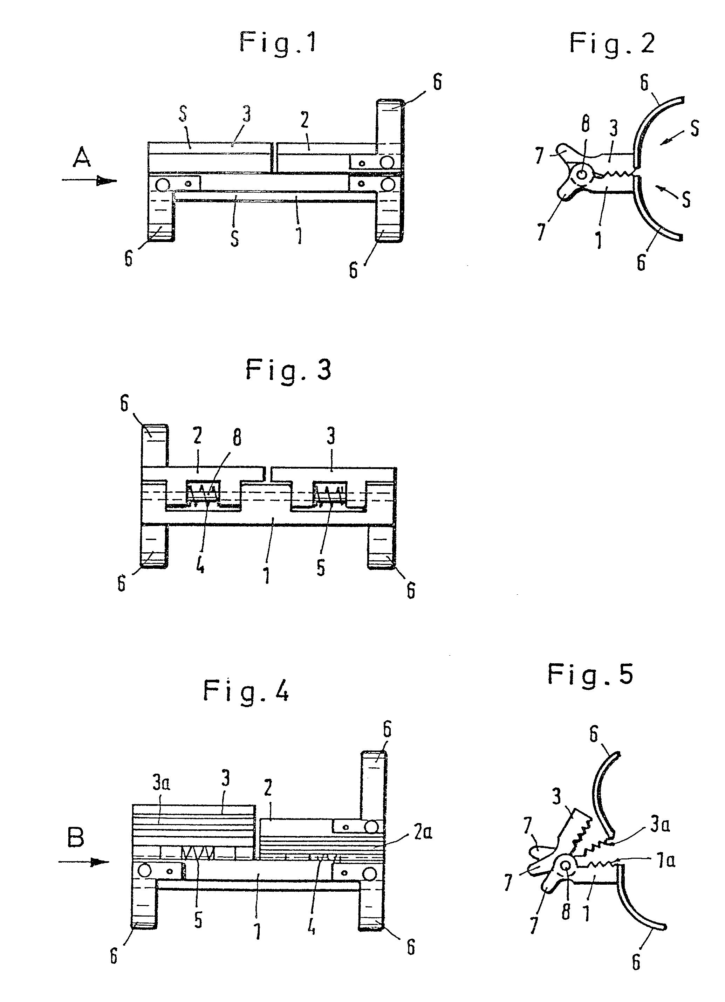

In der Ausführung nach Abbildung 1 bis 7 besteht die Vorrichtung aus einer Klemme oder Klammer, die aus dem Grundkörper 1 und zwei angelenkten Gelenkkörpern 2 und 3 zusammengesetzt ist. Grundkörper und Gelenkkörper können als Klemmelemente bezeichnet werden und im Querschnitt ähnlich oder identisch ausgeführt sein, wobei sie im Querschnitt zueinander klappsymmetrisch sind. Die Gelenkkörper werden mit ihren inneren Klemmflächen 2a, 3a durch Gelenkfedern 4 und 5 auf die Klemmfläche 1a des Grundkörpers gepresst. Die Federn 4, 5 sitzen als Schraubendrehfedern auf der waagerecht durchlaufenden Achse 8 der Klemme. Die Gelenkkörper 2, 3 sind einzeln gegenüber dem Grundkörper 1 bewegbar. An der dem Kopf zugewandten Stirnseite S des Grundkörpers und des Gelenkkörpers sind Ausleger, Abstützelemente oder Abstützbügel 6 rechtwinklig zur Achse 8 oberhalb und unterhalb der Klemme befestigt.

Grundkörper und Gelenkkörper weisen jeweils auf der dem Kopf abgewandten Seite Griffenden 7 auf, die das Aufspreizen der Klemme ermöglichen. Da die Griffenden 7 auf der dem Kopf abgewandten Seite sich über die Achse 8 hinaus erstrecken, bilden sie mit dem Gelenkkörper 2, 3 bzw. dem Grundkörper 1 einen Abschnitt eines zweiarmigen Hebels. Ferner sind die Klemmflächen 1a, 2a, 3a jeweils mit einer Verzahnung und/oder einer weichen Auflage ausgerüstet, die ein besseres Fassen der Augenbrauenhaare zum Ziele hat.

Zum Festklemmen an der Augenbraue wird die Klemme über ihre Griffenden 7 durch Fingerdruck geöffnet und über die Augenbrauenhaare geschoben. Die Klemme klemmt sich im Verzahnungsbereich in den Haaren fest und wird gegen Abkippen durch die Abstützbügel 6, die sich an den Kopf anlegen, abgesichert.

Die Klemme kann in den Augenbrauen mehrfach, hier zweifach, festgeklemmt werden. Über die Gelenkkörper 2 und 3 können so unterschiedlich dicke Haarbereiche separat zum Festklemmen gefasst werden.

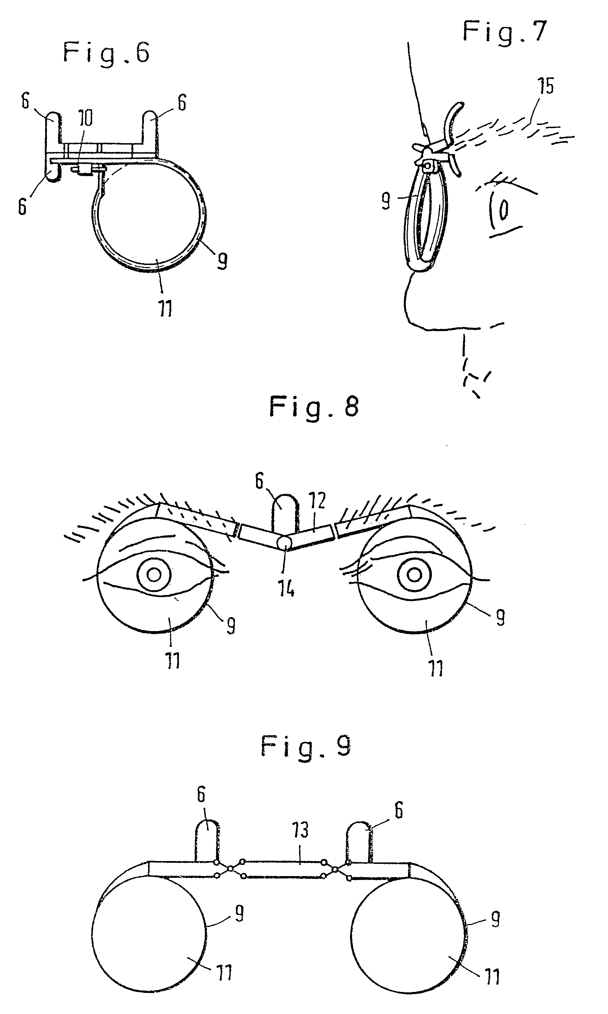

Unterhalb der Klemme (Abb. 6) ist am Grundkörper 1 die Augenglasfassung 9 befestigt. Sie hält über einen Schraubmechanismus 10 das Augenglas 11 fest. Die Fassung 9 kann gegenüber der Klemme in ihrer Lage verstellbar, insbesondere verschiebbar, dreh- oder kippbar sein.

Abbildung 7 zeigt die am Kopf des Menschen befestigte Vorrichtung. Das Gestell kann einzeln an jeder Augenbraue befestigt werden und muss nicht Kontakt zum an der nächsten Augenbraue sitzenden zweiten Gestell haben. Jedoch ist nach der Ausführung in Abbildung 8 über ein Verbindungsgestänge 12 eine Vereinigung des Einzel-Augenglashalters zu einem Doppel-Augenglashalter möglich. In einem weiteren Ausführungsbeispiel nach Abbildung 9 ist ein Öffnungsmechanismus (Gestänge) 13, der mindestens zwei Klemmen betätigt, mittig zwischen den Einzel-Klemmen angebracht, so dass beide Klemmen durch einen Griff gleichzeitig zentral geöffnet werden können.

Die Klemmelemente, d. h. der Grundkörper 1 und die Gelenkkörper 2, 3 sind an ihren Stirnseiten S zu den Klemmflächen 1a, 2a, 3a hin abgerundet, so dass dort eine nach aussen hin sich vergrössernde Erweiterung besteht und damit die Klemmflächen erst in einem Abstand A zu den Stirnseiten und zum Kopf beginnen. Dies verhindert ein versehentliches Einklemmen von Gesichtshaut.

Nach Fig. 8 kann der Verbindungssteg 12 ein Gelenk 14 mittig zur Winkelverstellung der Gestellteile zueinander aufweisen. Darüber hinaus können Klemme und Fassung miteinander einen spitzen, insbesondere veränderbaren Winkel bilden. Hierzu kann die Fassung über einen nicht gezeigten biegsamen Steg mit der Klemme verbunden sein.

In weiteren, in den Zeichnungen nicht dargestellten Ausführungsbeispielen kann statt der Drehfeder ein Magnet verwendet werden und können die Klemmen, die dazwischen befindlichen Teile, insbesondere Stege und Gestänge als auch sonstige Teile des Gestells wie auch die Fassung Blenden zur Zierde tragen.

Wie in den Fig. 8 und 9 dargestellt, müssen die Abstützbügel 6 nicht unbedingt an den Klemmen, sondern können auch an anderen Teilen des Gestells, insbesondere am Verbindungssteg, Gestänge oder Fassung befestigt sein. Ebenso frei ist man in der Auswahl der Abstützpunkte an Gesicht und Schädel, auch im Befolgen der Anforderungen des Designs.

## Patentansprüche

1. Brillenähnliches Gestell, das im Augenbereich klemmend zu befestigen ist und ein Augenglas (11) aufnimmt, dadurch gekennzeichnet, dass es eine Klemme (1-8), insbesondere eine Klammer aufweist, die zur Befestigung an der Augenbraue (15) ausgebildet ist, und die direkt oder indirekt die Fassung (9) zur Aufnahme des Augenglases (11) hält.

2. Gestell nach Anspruch 1, dadurch gekennzeichnet, dass, um ein Kippen oder Verdrehen der Klemme (1-8) um ihre waagerechte Längsachse zu verhindern, das Gastell in der Klemme oder in sonstigen Teilen Ausleger, insbesondere federnde Bügel (6), aufweist, die sich am Kopf abstützen.

3. Gestell nach Anspruch 2, dadurch gekennzeichnet, dass die von der Klemme (1-8) ausgehenden Bügel (6) oder Ausleger in Richtung auf den Kopf des Menschen gebogen oder gewinkelt sind.

4. Gestell nach Anspruch 2 oder 3, dadurch gekennzeichnet, dass die Bügel (6) oder Ausleger oberhalb und/oder unterhalb der Klemme angeordnet sind.

5. Gestell nach einem der Ansprüche 2 bis 4, dadurch gekennzeichnet, dass die Bügel (6) oder Ausleger ausserhalb des eigentlichen Klemmbereiches zwischen den Fassungen (9) oder Klemmen (1-8) insbesondere auf einem Verbindungssteg (12) angeordnet sind.

6. Gestell nach einem der Ansprüche 1 bis 5, dadurch gekennzeichnet, dass die Klemme (1-8) zwei oder mehrere übereinander angeordnete Klemmelemente (1, 2, 3) aufweist.

7. Gestell nach einem der Ansprüche 1 bis 6, dadurch gekennzeichnet, dass die Klemme (1-8) in mehrere horizontal nebeneinander angeordnete Klemmbereiche unterteilt ist, die unabhängig voneinander an den Haaren der Augenbraue (15) festklemmbar sind.

8. Gestell nach einem der Ansprüche 1 bis 7, dadurch gekennzeichnet, dass die Klemme in ihrer Achsrichtung der Augenbrauenkrümmung folgt.

9. Gestell nach einem der Ansprüche 1 bis 8, dadurch gekennzeichnet, dass die inneren Klemmflächen der Klemme insbesondere eine Verzahnung und/oder eine weiche, greifende Auflage aufweisen.

10. Gestell nach einem der Ansprüche 1 bis 9, dadurch gekennzeichnet, dass, von oben gesehen, Klemme (1-8) und Augenglasfassung (9) miteinander einen Winkel bilden.

11. Gestell nach einem der Ansprüche 1 bis 10, dadurch gekennzeichnet, dass das die Klemmkraft erzeugende Element eine Feder (5) oder ein Magnet ist.

12. Gestell nach einem der Ansprüche 1 bis 11, dadurch gekennzeichnet, dass das Gerät aus zwei miteinander nicht verbundenen Ein-Augen-Ausführungen besteht.

13. Gestell nach einem der Ansprüche 1 bis 12, dadurch gekennzeichnet, dass die Ein-Augen-Ausführung des Gerätes besondere Vorrichtungen (12) enthält, die ihr Zusammenstecken oder sonstigen Verbinden zu einer Zwei-Augen-Ausführung ermöglichen.

14. Gestell nach Anspruch 13, dadurch gekennzeichnet, dass ein Verbindungssteg (12), der die Einzel-Augen-Ausführungen zur Zwei-Augen-Ausführung zusammenfügt, ein Gelenk (14) zur Winkelverstellung aufweist.

15. Gestell nach einem der Ansprüche 1 bis 14, dadurch gekennzeichnet, dass die Klemmen, verbindenden Mittelstücke und/oder sonstige Teile des Gestells austauschbare Blenden, insbesondere Schmuckblenden, tragen.

16. Gestell nach einem der Ansprüche 1 bis 15, dadurch gekennzeichnet, dass jede Klemme (1-8) einzeln betätigbar ist.

17. Gestell nach einem der Ansprüche 1 bis 16, dadurch gekennzeichnet, dass zur Betätigung zweier oder mehrerer Klemmen (1-8) an einem Zwei-Augen-Gerät ein einziger Griff (13) mittig vorgesehen ist.

18. Gestell nach einem der Ansprüche 1 bis 17, dadurch gekennzeichnet, dass die inneren Klemmflächen (1a, 2a, 3a) der Klemmelemente (1, 2, 3) in einem Abstand zu der Stirnseite (S) liegen.

19. Gestell nach Anspruch 18, dadurch gekennzeichnet, dass die Klemmelemente (1, 2, 3) zum Kopf zu abgerundet sind.

20. Gestell nach einem der Ansprüche 1 bis 19, dadurch gekennzeichnet, dass die Glasfassung (9) gegenüber der Klemme (1-8) oder dem Gestell verstellbar, insbesondere seitlich verschiebbar, im Augenabstand veränderbar, drehbar und/oder kippbar ist.

21. Gestell nach einem der Ansprüche 1 bis 20, dadurch gekennzeichnet, dass eine Klemme mit einer oder mehreren Klemmen verbunden ist, um diese zu betätigen.

22. Gestell nach einem der Ansprüche 1 bis 21, dadurch gekennzeichnet, dass das Gerät als Zwei-Augen-Ausführung, also z. B. mit einem Verbindungsteil oder Verbindungssteg zwischen den Ein-Augen-Gestellen oder in Form einer zusammenhängenden durchgehenden Konstruktion, gebaut ist.

## Claims

1. Spectacle-like frame for receiving at least one eye-glass (11), characterised in that it has a clamp (1-8), especially a clip, which can be fastened to the eyebrow (15) and which holds, directly or indirectly, the mounting (9) for receiving the eyeglass (11).

2. Frame according to Claim 1, characterised in that, to prevent the clamp (1-8) from tilting or rotating about its horizontal longitudinal axis, the frame has arms in the clamp or in other parts, especially resilient bows (6), which are supported on the head.

3. Frame according to Claim 2, characterised in that the bows (6) or arms, which project from the clamp (1-8), are bent or angled in the direction of the person's head.

4. Frame according to Claim 2 or 3, characterised in that the bows (6) or arms located above and/or below the clamp.

5. Frame according to one of Claims 2 to 4, characterised in that the bows (6) or arms are located outside the actual clamping region between the mountings (9) or clamps (1-8), especially on a connecting bridge (12).

6. Frame according to one of Claims 1 to 5, characterised in that the clamp (1-8) has two or more clamping elements (1, 2, 3) arranged above one another.

7. Frame according to one of Claims 1 to 6, characterised in that the clamp (1-8) is subdivided into several clamping regions which are arranged horizontally next to one another and which can be clamped firmly to the hair of the eyebrow (15) independently of one another.

8. Frame according to one of Claims 1 to 7, characterised in that the clamp follows the curve of the eyebrow in its axial direction.

9. Frame according to one of Claims 1 to 8, characterised in that the inner clamping faces of the clamp have especially a toothing and/or a soft gripping rest.

10. Frame according to one of Claims 1 to 9, characterised in that, seen from above, the clamp (1-8) and the eye-glass mounting (9) form an angle with one another.

11. Frame according to one of Claims 1 to 10, characterised in that the element generating the clamping force is a spring (5) or a magnet.

12. Frame according to one of Claims 1 to 11, characterised in that the appliance consists of two monocular constructions not connected to one another.

13. Frame according to one of Claims 1 to 12, characterised in that the monocular construction of the appliance contains special devices (12) which allow it to be assembled together or otherwise connected to form a binocular construction.

14. Frame according to Claim 13, characterised in that a connecting bridge (12), which joins together the monocular constructions to form the binocular construction, has a joint (14) for angular adjustment.

15. Frame according to one of Claims 1 to 14, characterised in that the clamps, connecting central pieces and/or other parts of the frame carry echangeable covers, especially decorative covers.

16. Frame according to one of Claims 1 to 15, characterised in that each clamp (1-8) can be actuated individually.

17. Frame according to one of Claims 1 to 16, characterised in that a single handle (13) is provided centrally on a binocular appliance for actuating two or more clamps (1-8).

18. Frame according to one of Claims 1 to 17, characterised in that the inner clamping faces (1a, 2a, 3a) of the clamping elements (1, 2, 3) are at a distance from the end face (S).

19. Frame according to Claim 18, characterised in that the clamping elements (1, 2, 3) are rounded off towards the head.

20. Frame according to one of Claims 1 to 19, characterised in that the eye-glass mouting (9) is adjustable, especially laterally displaceable, variable in terms of the distance between the eyes, rotatable and/or tiltable in relation to the clamp (1-8) or the frame.

21. Frame according to one of Claims 1 to 20, characterised in that one clamp is coupled to one or more clamps for operating them.

22. Frame according to one of Claims 1 to 21, characterised in that the appliance is a binocular construction, thus for example with a connecting part or connecting bridge between the monocular frames of in shape of a connected through construction.

## Revendications

1. Monture du type lunettes qui doit être fixée par pincement dans la région des yeux et reçoit au moins un verre de lunette (11), caractérisée en ce qu'elle présente une pince (1-8), en particulier une agrafe, qui est formée pour être fixée au sourcil (15) et qui porte directement ou indirectement le châssis (9) de réception du verre de lunette (11).

2. Monture selon la revendication 1, caractérisée en ce que, pour empêcher un basculement ou une rotation de la pince (1-8) autour de son axe longitudinal horizontal, la monture présente, dans la pince ou dans des parties particulières, des bras, en particulier des branches (6) élastiques, qui s'appuient sur la tête.

3. Monture selon la revendication 2, caractérisée en ce que les branches (6) ou bras partant de la pince (1-8) sont pliés ou inclinés en direction de la tête de l'homme.

4. Monture selon l'une des revendications 2 ou 3, caractérisée en ce que les branches (6) ou bras sont disposés au-dessus et/ou au-dessous de la pince.

5. Monture selon l'une des revendications 2 à 4, caractérisée en ce que les branches (6) ou bras sont disposés à l'extérieur de la zone de pincement propre entre les châssis (9) ou les pinces (1-8), en particulier sur une entretoise de liaison.

6. Monture selon l'une des revendications 1 à 5, caractérisée en ce que la pince (1-8) présente deux éléments de pincement (1, 2, 3) ou plus, disposés les uns au-dessus des autres.

7. Monture selon l'une des revendications 1 à 6, caractérisée en ce que la pince (1-8) est divisée en plusieurs zones de pincement disposées horizontalement côte à côte, qui peuvent être fixées par pincement indépendamment les unes des autres aux poils du sourcil (15).

8. Monture selon l'une des revendications 1 à 7, caractérisée en ce que la pince suit dans sa direction axiale la courbure du sourcil.

9. Monture selon l'une des revendications 1 à 8, caractérisée en ce que les surfaces de pincement intérieures de la pince présentent en particulier une denture et/ou un revêtement mou mordant.

10. Monture selon l'une des revendications 1 à 9, caractérisée en ce que, vus de dessus, la pince (1-8) et le châssis (9) forment entre eux un angle.

11. Monture selon l'une des revendications 1 à 10, caractérisée en ce que l'élément créant la force de pincement est un ressort (5) ou un aimant.

12. Monture selon l'une des revendications 1 à 11, caractérisée en ce que l'appareil est formé de deux constructions pour un œil non liées l'une à l'autre.

13. Monture selon l'une des revendications 1 à 12, caractérisée en ce que la construction pour un œil de l'appareil contient des dispositifs (12) qui permettent son repliement ou sa liaison particulière pour une construction pour deux yeux.

14. Monture selon la revendication 13, caractérisée en ce qu'une entretoise de liaison (12), qui relie les constructions pour un seul œil en une construction pour deux yeux, présente une articulation (14) de réglage d'angle.

15. Monture selon l'une des revendications 1 à 14, caractérisée en ce que les pinces, les pièces intermédiaires de liaison et/ou des parties particulières de la monture portent des écrans interchangeables, en particulier des écrans de décoration.

16. Monture selon l'une des revendications 1 à 15, caractérisée en ce que chaque pince (1-8) peut être actionnée individuellement.

17. Monture selon l'une des revendications 1 à 16, caractérisée par le fait qu'une seule poignée (13) est prévue au milieu pour l'actionnement de deux pinces (1-8) ou plus dans un appareil pour deux yeux.

18. Monture selon l'une des revendications 1 à 17, caractérisée en ce que les surfaces de pincement (1a, 2a, 3a) des éléments de pince (1, 2, 3) sont à une certaine distance de la face frontale (S).

19. Monture selon la revendication 18, caractérisée en ce que les éléments de pince (1, 2, 3) sont arrondis en direction de la tête.

20. Monture selon l'une des revendications 1 à 19, caractérisée en ce que le châssis (9) de verre est réglable, en particulier coulissant latéralement, par rapport à la pince (1-8) ou à la monture, sa distance par rapport à l'œil est modifiable, il est pivotant et/ou basculant.

21. Monture selon l'une des revendications 1 à 20, caractérisée en ce qu'une pince est reliée à une pince ou plusieurs afin de les actionner.

22. Monture selon l'une des revendications 1 à 21, caractérisée en ce que l'appareil est construit sous la forme d'une construction pour deux yeux, par exemple avec une pièce de liaison ou une entretoise de liaison entre les montures pour un œil ou sous la forme d'une construction continue suspendue.

0 100 014

Fig.1

Fig.2

Fig.3

Fig.4

Fig.5

7

## Fig. 6

## Fig. 7

## Fig. 8

## Fig. 9